# EUROPEAN PATENT APPLICATION

(11) **EP 4 822 209 A1**
(43) Date of publication of application: **14.10.2026**
(21) Application number: 24899611.8
(22) Date of filing: 20.11.2024
(51) Int. Cl.: F16F 9/34

(54) **FREQUENCY SELF-ADAPTIVE DAMPER VALVE ASSEMBLY AND SHOCK ABSORBER USING VALVE ASSEMBLY**

(30) Priority: 06.12.2023 CN 202311660044
(71) Applicant: ROLLAX BEARINGS (NANJING) CO., LTD., Nanjing, Jiangsu 210000 (CN)
(72) Inventor: SUN, Houcheng, Nanjing, Jiangsu 210000 (CN); DMITRY, Friesen, Nanjing, Jiangsu 210000 (CN)
(74) Representative: Ter Meer und Partner mbB
(86) International application number: PCT/CN2024/133127
(87) International publication number: WO 2025/118969

(57) **Abstract**

The present invention provides a frequency self-adaptive damping valve assembly and a shock absorber using the valve assembly. The frequency self-adaptive damping valve assembly includes a housing, a valve member, a flexible annular sealing element, and a volume-variable pressure chamber. A side of the volume-variable pressure chamber is defined by the flexible annular sealing element, and the valve member has a support part. The support part has a first engaging surface sealingly engaged with an upper end surface of the sealing element, and has a second engaging surface sealingly engaged with a lower end surface of the sealing element, and the sealing element is mounted on the support part through the first engaging surface and the second engaging surface. In the present invention, the lower end surface of the sealing element is suspended, and is not in contact with another component at a lower portion of the sealing element, to avoid nonlinear increase in load in a pressure establishment process, avoid friction with the housing, prevent damage to components, and improve stability and durability.

## Description

### TECHNICAL FIELD

The present invention relates to a frequency self-adaptive damping valve assembly and a shock absorber using the valve assembly, and is applicable to a plurality of technical fields such as automobiles and machinery.

### BACKGROUND

A damper or a shock absorber is an important component of a vehicle chassis traveling system, connects sprung mass and unsprung mass of a vehicle, and attenuates excitation vibration on a road through a design of a damping force, to improve driving and ride comfort. A FAD damping feature is a frequency adaptive damping (frequency adaptive damping) valve system, which adapts to different damping features in combination with different excitation frequencies on a road, and decomposes a sprung frequency and an unsprung frequency, to greatly improve vehicle driving comfort. A patent whose publication number is CN108012552B discloses a frequency-selectable damping valve. The damping valve has the following defects: (1) A mounting spring connects a support flexible board and a sealing element, which provides a specific auxiliary effect for establishment of a damping force, but there is nonlinear increase in load in a compression process of the mounting spring, and there is specific compression durability and permanent deformation, which has a specific impact on stability of the damping force. In addition, when being deformed due to compression, the mounting spring may rub against a housing, causing abnormal noise and damage to components, and may further generate powder due to friction, affecting flow cleaning, and even blocking fluid relief. (2) An interval element has an impact on the damping force and an adjustment range. The interval element connects a bias spring and a second flexible wall assembly. An always-open hole design and material rigidity of the interval element affect a pre-tightening force of a valve system. If a material is a flexible material, a change in an always-open hole area of the interval element during compression causes a change in stability of the damping force. If a material is a rigid material, rigidity of the valve system is increased and a range of a high-frequency damping force is reduced, which is not beneficial to adjustment of the high-frequency damping force. (3) A control channel through which a fluid flows into the inside of a valve body is formed by a gap between a second movable valve body part and a valve shim unit and a gap between a first movable valve body part and the valve shim unit. A cross section of a flow channel and a flow rate are difficult to control, and control precision is low. In addition, because there is the gap between the second movable valve body part and the valve shim unit and there is the gap between the first movable valve body part and the valve shim unit, the three components are prone to wear in an operating process, which further reduces the control precision and the stability. In addition, the control channel is cooperatively formed by three components, namely, the second movable valve body part, the valve shim unit, and the first movable valve body part. Due to a large quantity of components, tolerance stack-up is easily formed. Further, a cross-sectional area of the fluid in the control channel is small and control precision of the flow rate is low, which affects pressure establishment and damping establishment.

### SUMMARY

An objective of the present invention is to provide a frequency self-adaptive damping valve assembly and a shock absorber using the valve assembly.

To achieve the foregoing objective, the present invention provides a frequency self-adaptive damping valve assembly, including:
a housing, where the housing has an inlet port suitable for being fluidly connected to a first pressure chamber and an outlet port suitable for being fluidly connected to a second pressure chamber; and
a valve member, biased against an outlet edge of the first pressure chamber and arranged to allow, when pressure in the first pressure chamber exceeds particular opening pressure, a fluid to flow from the inlet port to the outlet port directly through an opening gap between the outlet edge and the valve member, where
the second pressure chamber is a volume-variable pressure chamber, and is fluidly connected to the first pressure chamber through a fluid inflow channel, and is fluidly connected to the outlet port through a fluid outflow channel;
the second pressure chamber is defined by a flexible annular sealing element on a side facing the first pressure chamber, the valve member has a support part, and the support part penetrates the sealing element and is supported on a support structure in the second pressure chamber; and
the support part has a first engaging surface sealingly engaged with an upper end surface of the sealing element, and has a second engaging surface sealingly engaged with a lower end surface of the sealing element, and the sealing element is mounted on the support part through the first engaging surface and the second engaging surface, to bias the valve member toward a direction of the first pressure chamber by using a force depending on pressure in the second pressure chamber.

In an implementation, a diameter of an inner hole of the sealing element is less than an outer diameter of the support part in fit with the inner hole of the sealing element, and an outer diameter of the sealing element is greater than an inner diameter of the housing in sealing fit with the sealing element.

In an implementation, an edge of the lower end surface of the sealing element extends downward to form a convex bump.

In an implementation, the second pressure chamber is defined by a support valve shim unit on a side facing a bottom portion of the housing.

In an implementation, the valve member includes a valve upper housing and a valve lower base, where an always-open hole is formed on a body of the valve upper housing as a first fluid inflow channel; an always-open hole is formed on a body of the valve lower base as a second fluid inflow channel; and the first fluid inflow channel and the second fluid inflow channel form a part of the fluid inflow channel; and a cross-sectional area of the second fluid inflow channel is less than a cross-sectional area of the first fluid inflow channel.

In an implementation, the body of the valve upper housing extends downward to form a buffer cavity forming portion; a buffer cavity is formed inside the buffer cavity forming portion; and the buffer cavity is located between the first fluid inflow channel and the second fluid inflow channel, and the buffer cavity, the first fluid inflow channel, and the second fluid inflow channel are in fluid communication with each other.

In an implementation, the buffer cavity forming portion is in sealing fit with the valve lower base, and the valve lower base is in sealing and slidable fit with an inner wall of the housing through the sealing element.

In an implementation, a bottom portion of the buffer cavity has an opening structure, an opening edge of the buffer cavity forming portion is placed on the body of the valve lower base, and a sealing member is arranged between the opening edge and the body of the valve lower base.

In an implementation, the valve member further includes a mounting valve shim, the support part is provided with a boss on a side facing the first pressure chamber, the mounting valve shim is nested on the boss, at least a part of an upper end surface of the mounting valve shim abuts against a body of the valve member, and a lower end surface of the mounting valve shim and an end surface of the boss are jointly used as the first engaging surface and are sealingly engaged with the sealing element.

In an implementation, a limiting support portion is arranged on a side wall of the housing, and the upper end surface of the mounting valve shim abuts against and is in fit with the limiting support portion.

In an implementation, an end surface of the limiting support portion that is in fit with the mounting valve shim has a planar structure, and a side of the limiting support portion that faces an internal space of the housing is set as an R-angle structure.

In an implementation, the limiting support portion is arranged on an end surface of a part of an upper housing that extends into a lower housing.

In an implementation, an always-open hole used as the fluid outflow channel is further provided on the body of the valve lower base; and an inlet of the fluid outflow channel is in fluid communication with the pressure cavity, and an outlet of the fluid outflow channel is in fluid communication with the outlet port through a fluid flow channel.

In an implementation, a mounting space adapted to a buffer cavity forming portion is formed on the valve lower base and is used for placing the buffer cavity forming portion; an opening edge of the buffer cavity forming portion is arranged on the body of the valve lower base; and a fluid relief gap is formed between an outer wall of the buffer cavity forming portion and the valve lower base.

In an implementation, the outlet of the fluid outflow channel is in fluid communication with the fluid relief gap, and the fluid relief gap is in fluid communication with the outlet port through the fluid flow channel.

In an implementation, a pressure relief cavity is formed among the valve upper housing, the valve lower base, a mounting valve shim, and an inner wall of the housing, and the pressure relief cavity is in communication with the outside of the valve assembly housing through the outlet port; and the fluid relief gap extends from a gap between the valve lower base and the valve upper housing to the pressure relief cavity and is in fluid communication with the pressure relief cavity.

In an implementation, a sealing elastic valve shim is arranged between the buffer cavity forming portion and the valve lower base, so that the buffer cavity forming portion is in sealing fit with the valve lower base; and an outlet of the fluid outflow channel is located on an outer side of an edge of the sealing elastic valve shim.

In an implementation, a sealing elastic valve shim is arranged between the buffer cavity forming portion and the valve lower base, so that the buffer cavity forming portion is in sealing fit with the valve lower base; and an outlet of the fluid outflow channel is located on an inner side of an edge of the sealing elastic valve shim, and a fluid relief valve shim is arranged at the outlet of the fluid outflow channel, so that the fluid outflow channel is in fluid communication with a fluid relief gap.

In an implementation, the fluid relief valve shim is a throttle valve shim.

In an implementation, a notch or a gap is provided on the fluid relief valve shim, the fluid relief valve shim is located between the outlet of the fluid outflow channel and the sealing elastic valve shim, and the fluid flows into the fluid relief gap through the notch or the gap.

In an implementation, the valve member further includes a support valve shim unit and a support sealing member; the support valve shim unit is arranged at a bottom portion of the housing, the support sealing member is placed on the support valve shim unit, the support valve shim unit is in sealing fit with an inner wall of the housing through the support sealing member, and the support structure and the support sealing member are movable along the inner wall of the housing; and the support structure is arranged on the support sealing member, and a valve lower base is arranged on the support structure.

In an implementation, the support structure is a spring sheet, and the spring sheet is provided with a communication hole communicating an upper side and a lower side of the spring sheet, and a space on the upper side of the spring sheet is in communication with a space on the lower side of the spring sheet through the communication hole.

The present invention further provides a shock absorber, including the frequency self-adaptive damping valve assembly according to any one of the foregoing, where a fluid inlet channel located in a piston rod of the shock absorber is in fluid communication with an inlet port of a first pressure chamber.

Compared with the related art, the present invention has the following beneficial effects:
(1) In the present invention, a sealing element is mounted in a limiting manner by a support part of a valve member. Particularly, a lower end surface of the sealing element is supported by a second engaging surface of the support part. In this way, the sealing element is suspended, and is not in contact with another component at a lower portion of the sealing element. In addition, such a mounting manner simplifies a structure, and eliminates a mounting spring supporting the sealing element in the related art, to avoid nonlinear increase in load in a pressure establishment process, avoid friction with a housing, prevent damage to components, and improve stability and durability.
(2) A fluid inflow channel is formed by an always-open hole on a valve upper housing and an always-open hole on a valve lower base, and a plurality of components do not need to be in fit with each other. Therefore, tolerance stack-up does not occur. In addition, the always-open hole facilitates precise control of a cross-sectional area of a fluid inflow channel and a flow rate, to improve control precision and stability of damping.
(3) In the related art, a flow channel is formed by a gap on a side surface of a valve rod, a flow cross-sectional area thereof is difficult to precisely control, and the flow cross-sectional area is limited. However, in the present invention, a fluid flow channel is formed on the valve upper housing in a manner of the always-open hole, an adjustable range of the flow cross-sectional area is large, and arrangement and control precision are high, thereby further improving damping stability and controllability.
(4) A buffer cavity is provided in the fluid inflow channel, so that when a fluid flows in and pressure is established, pressure establishment is more stable and there is no great fluctuation, to improve controllability and stability of damping.
(5) In a process in which the fluid flows in and the pressure is established, because a flow route Fd2 is of an always-open hole design, the fluid first flows into a pressure cavity through Fd2 and pressure is established, so that an establishment speed of the pressure in the pressure cavity is fast. When a shock absorber enters a high-frequency stretching operating state from a low-frequency operating state, because an establishment speed of pressure in a cylinder of the shock absorber and an establishment speed of pressure in a valve assembly fluid inlet channel are greater than the establishment speed of the pressure in the pressure cavity, after fluid pressure in the cylinder of the shock absorber and fluid pressure in the valve assembly fluid inlet channel are greater than a closing force that is exerted on a control valve and that is provided by a pre-tightening force and a closing force provided by the pressure in the pressure cavity, a gap between an outlet of the valve assembly fluid inlet channel and a valve shim unit is opened and a fluid relief flow route Fd4 is established. In this case, a part of a fluid flows out through the fluid relief flow route Fd4, and a boundary between opening and closing of the control valve and a boundary between opening and closing of the fluid relief flow route Fd4 are obvious.
(6) Because the flow route Fd2 is of the always-open hole design, and is not formed by a gap in which a flow rate is difficult to control in the related art, flow rate control parameters of a first fluid inflow channel, a buffer cavity, and a second fluid inflow channel are precisely designed and controlled. In addition, the flow route Fd2 is in sealing fit with a fluid relief gap, a pressure relief cavity, a fluid outflow channel, and the like, and the pressure cavity is also in sealing fit with other components. In this way, when both the fluid inflow channel and the pressure cavity are in a sealing condition, an amount of fluid entering the pressure cavity can be accurately controlled, and further, the pressure establishment in the pressure cavity can be precisely controlled, and the closing force of the control valve can be accurately controlled. An opening frequency of a FAD valve assembly can be controlled more precisely and more accurately.

Other features and advantages of the present invention will become more obvious from the following more detailed descriptions. These descriptions describe a principle of the present invention by using examples with reference to the accompanying drawings.

### BRIEF DESCRIPTION OF THE DRAWINGS

To describe the technical solutions in embodiments of this application or in the related art more clearly, the following briefly describes the accompanying drawings needed for describing the embodiments or the related art. Apparently, the accompanying drawings in the following descriptions show merely some embodiments of the present invention, and a person of ordinary skill in the art may derive other drawings from these accompanying drawings without creative efforts.
FIG. 1 is a schematic diagram of a structure of a shock absorber according to the present invention.
FIG. 2 is a schematic diagram of a structure of a frequency self-adaptive damping valve assembly according to the present invention.
FIG. 3 is a schematic diagram of a structure of a control valve according to the present invention.
FIG. 4 is a schematic diagram of a structure of a balance valve according to the present invention.
FIG. 5 is an enlarged schematic diagram of a sealing element in a balance valve.
FIG. 6 is a schematic diagram of a structure of a support part in a balance valve.
FIG. 7 is a schematic diagram showing fitting between a sealing element and a support part in a balance valve.
FIG. 8 is a schematic diagram of assembly of a control valve and a balance valve according to the present invention.
FIG. 9 is an enlarged schematic diagram of sealing fit in assembly of a control valve and a balance valve according to the present invention.
FIG. 10 is a schematic diagram of assembly of a movable valve and a balance valve according to the present invention.
FIG. 11 is a schematic diagram of a pressure relief cavity and front and rear flow channels according to the present invention.
FIG. 12 is a schematic diagram of a fluid flow route in an implementation of a shock absorber according to the present invention.
FIG. 13 is an enlarged schematic diagram of a fluid flow route of a frequency self-adaptive damping valve assembly in FIG. 12.

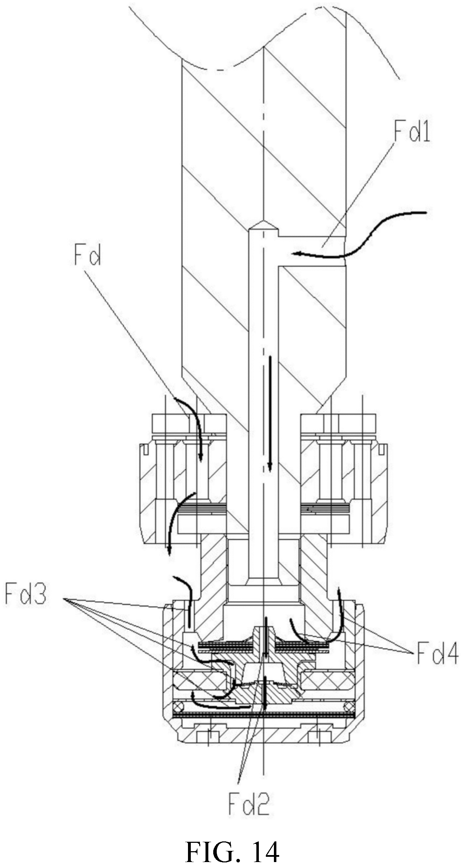

FIG. 14 is a schematic diagram of a fluid flow route in another implementation of a shock absorber according to the present invention.

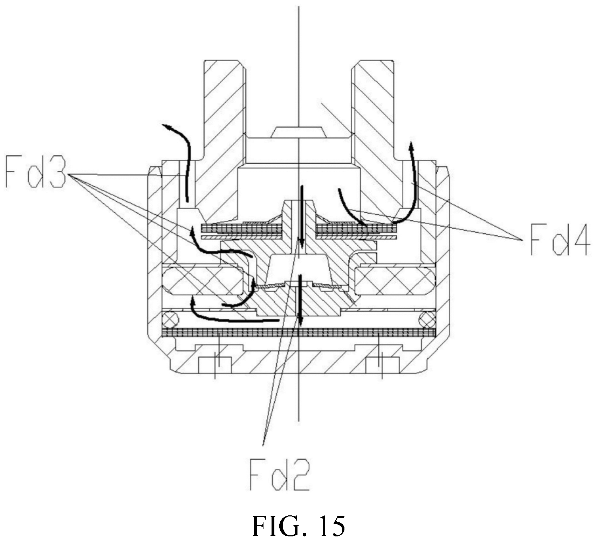

FIG. 15 is an enlarged schematic diagram of a fluid flow route of a frequency self-adaptive damping valve assembly in FIG. 14.

100-Piston rod, 200-first support gasket, 300-FAD valve assembly, 301-upper housing, 302-lower housing, 303-movable valve, 304-control valve, 305-balance valve, 306-FAD valve oil liquid inlet channel, 400-FAD inlet channel, 500-flow valve assembly, 600-piston assembly, 700-restoring valve assembly, 800-second support gasket, 3031-spring sheet, 30311-communication hole, 3032-support valve shim unit, 3033-support sealing member, 3041-spring clip, 30441-mounting surface, 30442-rod-shaped mounting portion, 30443-buffer cavity forming portion, 30444-first fluid inflow channel, 30445-edge, 30446-buffer cavity, 3042-valve shim unit, 3043-limiting valve shim, 3044-upper valve housing, 3051-valve lower base, 30511-mounting space, 30512-groove, 30513-convex bump, 30514-first engaging surface, 30515-second engaging surface, 3052-second fluid inflow channel, 3053-fluid outflow channel, 3054-mounting valve shim, 3055-sealing element, 3056-sealing elastic valve shim, 3057-fluid relief valve shim, 307-pressure cavity, 308-fluid relief gap, 309-pressure relief cavity, 3010-balance cavity, 3021-discharge port, 3011-limiting support portion, 3012-fitting portion, and 3013-fluid relief hole.

### DETAILED DESCRIPTION

It is easy to understand that, according to the technical solutions of the present invention, a person of ordinary skill in the art may conceive of a plurality of implementations of the present invention without changing the essence and the spirit of the present invention. Therefore, the following specific implementations and accompanying drawings are merely exemplary descriptions of the technical solutions of the present invention, and should not be considered as all of the present invention or considered as a limitation to the technical solutions of the present invention. The present invention may be implemented in various forms, and embodiments are not intended to limit the scope of the present invention. On the contrary, an objective of providing these embodiments is to enable a person skilled in the art to more thoroughly understand the present invention. The following describes preferred embodiments of the present invention in detail with reference to the accompanying drawings. The accompanying drawings form a part of this application, and are used to explain the innovative concept of the present invention together with the embodiments of the present invention.

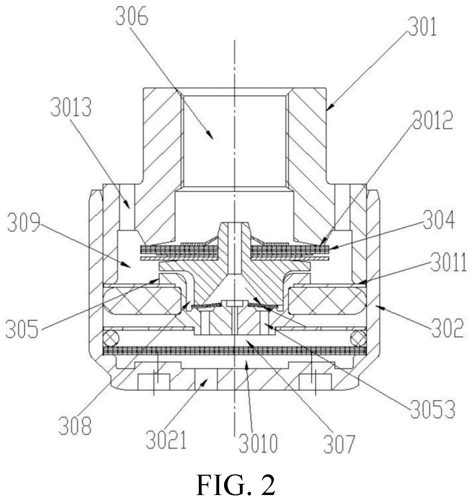

As shown in FIG. 2, a frequency self-adaptive damping valve assembly 300 in the present invention includes an assembly housing, and a valve member arranged inside the housing. The valve member includes a control valve 304, a balance valve 305, and a movable valve 303.

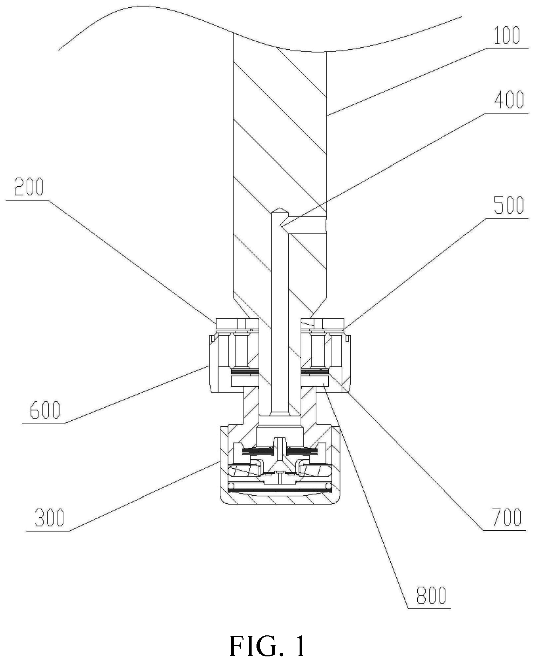

For ease of assembly of components inside the housing, the housing is a combined housing. For example, in this embodiment, the assembly housing may be divided into an upper housing 301 and a lower housing 302. The upper housing 301 and the lower housing 302 are adapted to each other and are assembled to form an internal mounting space. The assembly housing is arranged as two parts: the upper housing 301 and the lower housing 302, mainly for ease of mounting other components located inside the housing. In some cases, the upper housing 301 may be formed by an end portion of a piston rod of a shock absorber. Therefore, a division manner of the upper housing 301 and the lower housing 302 shown in FIG. 1 is merely an example. When other structures or components may be mounted and arranged, a division manner and a fitting manner of the assembly housing are not limited to those shown in FIG. 1.

As shown in FIG. 2, an upper end of the housing is provided with a valve assembly fluid inlet channel 306, and the fluid inlet channel 306 is also used as a first pressure chamber 306 of the frequency self-adaptive damping valve assembly 300. As shown in FIG. 1, the valve assembly fluid inlet channel/first pressure chamber 306 is in fluid communication with a FAD inlet channel 400 provided in a valve rod of the shock absorber. A fluid enters the inside of the FAD valve assembly 300 through the valve assembly fluid inlet channel 306. In the embodiment shown in FIG. 2, the valve assembly fluid inlet channel 306 is provided on the upper housing 301, to form an inlet port suitable for being fluidly connected to the first pressure chamber 306.

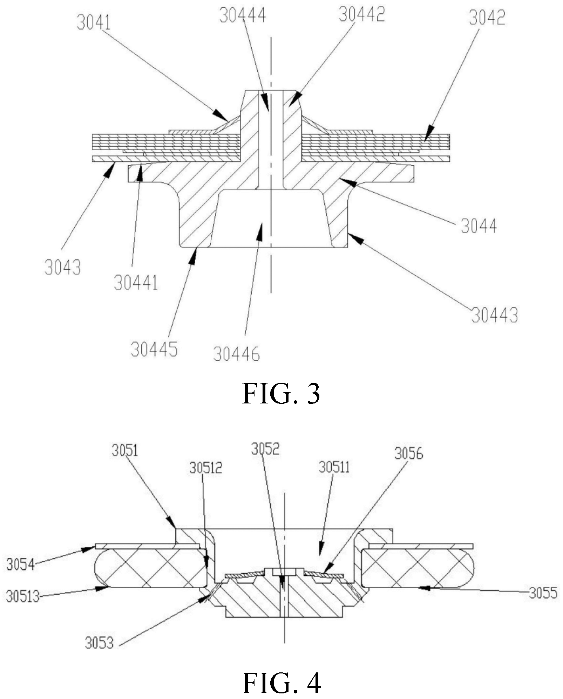

As shown in FIG. 2 and FIG. 3, the control valve 304 includes a valve upper housing 3044, a limiting valve shim 3043, a valve shim unit 3042, and a fixing component 3041.

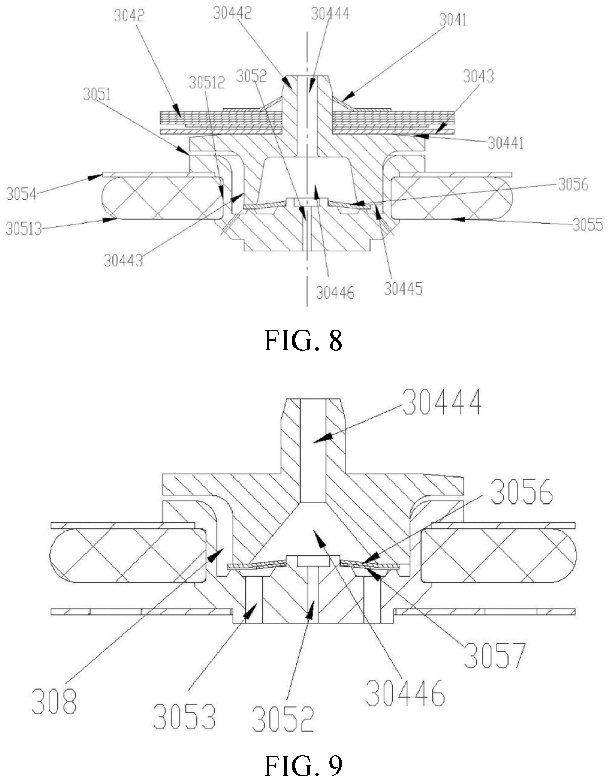

The valve upper housing 3044 includes a mounting surface 30441 extending from a center to an edge, and a body of the valve upper housing 3044 extends upward from the mounting surface 30441 to form a rod-shaped mounting portion 30442. The rod-shaped mounting portion 30442 is hollow, an always-open hole running through the rod-shaped mounting portion 30442 is formed in a length direction of the rod-shaped mounting portion 30442, and the always-open hole is used as a first fluid inflow channel 30444. The body of the valve upper housing 3044 extends downward from the mounting surface 30441 to form a buffer cavity forming portion 30445, an internal space of the buffer cavity forming portion 30445 is used as a buffer cavity 30446, and an edge 30445 at a lower portion of the buffer cavity forming portion 30445 has an opening structure. An inlet located at an upper end of the first fluid inflow channel 30444 is in fluid communication with an internal cavity at the upper end of the valve assembly housing. An inlet at a top portion of the buffer cavity 30446 is in fluid communication with an outlet at a lower end of the first fluid inflow channel 30444, and a lower portion of the buffer cavity 30446 has an opening structure. Specifically, an external shape of the buffer cavity forming portion 30443 may be a cylinder or an eccentric cylinder. The buffer cavity 30446 located inside the buffer cavity forming portion 30443 may be a cone-shaped cavity, a cylinder-shaped cavity, or a roughly cylinder-shaped cavity. As shown in FIG. 2, the buffer cavity 30446 is cone-shaped, a cone top is in fluid communication with the outlet located at the lower end of the first fluid inflow channel 30444, and a cone bottom is open. From the cone top to the cone bottom, a cross-sectional area of the buffer cavity is gradually increased and is greater than a cross-sectional area of the first fluid inflow channel 30444. As shown in FIG. 3 and FIG. 8, the buffer cavity 30446 is roughly cylinder-shaped. A diameter of the buffer cavity 30446 is greater than a diameter of the first fluid inflow channel 30444, or a cross-sectional area of the buffer cavity is greater than the cross-sectional area of the first fluid inflow channel 30444. After the fluid enters the buffer cavity 30446 through the first fluid inflow channel 30444, pressure of the fluid may be released to some extent due to the increase in the space, or the fluid is temporarily stored before entering a subsequent flow channel. That is how the buffer cavity gets its name. Because the buffer cavity 30446 is provided in the fluid inflow channel leading to a pressure cavity, in a process in which the fluid flows into the pressure cavity and pressure is established, pressure establishment is more stable and there is no great fluctuation, to improve controllability and stability of damping.

As shown in FIG. 3 and FIG. 8, the limiting valve shim 3043 and the valve shim unit 3042 are nested on the rod-shaped mounting portion 30442, and are fixed by the fixing component 3041. The limiting valve shim 3043 is arranged on the mounting surface 30441, the valve shim unit 3042 is arranged on the limiting valve shim 3043, and the fixing component 3041 is pressed against the limiting valve shim 3043. The limiting valve shim 3043 is used as mounting support and a stress release point of the valve shim unit 3042, and provides deformation protection for the valve shim unit 3042. The valve shim unit 3042 provides a sealing function under an action of a closing force. In the embodiment shown in FIG. 3, the fixing component 3041 is a spring clip. The spring clip is clamped on the rod-shaped mounting portion 30442 and is pressed against the valve shim unit 3042, to fix the valve shim unit 3042 and the limiting valve shim 3043 on the rod-shaped mounting portion 30442. In another implementation, the fixing component 3041 may alternatively use another fixing manner, for example, a screw or a latch. The screw or the latch fixes the valve shim unit 3042 and the limiting valve shim 3043 on the rod-shaped mounting portion 30442 by fitting with the rod-shaped mounting portion 30442.

As shown in FIG. 2, FIG. 4, FIG. 8, and FIG. 10, the balance valve 305 includes a valve lower base 3051, a mounting valve shim 3054, a sealing element 3055, and a sealing elastic valve shim 3056.

An upper portion of a body of the valve lower base 3051 forms a mounting space 30511 that is of the buffer cavity forming portion and that is adapted to the buffer cavity forming portion 30445, and a lower portion of the body of the valve lower base 3051 is provided with at least two always-open holes to form fluid channels, which include a second fluid inflow channel 3052 and a fluid outflow channel 3053. The second fluid inflow channel 3052 vertically (which may alternatively be obliquely in another embodiment) runs through the body of the valve lower base 3051. An inlet at an upper end of the second fluid inflow channel 3052 is in fluid communication with the buffer cavity 30446, and an outlet at a lower end of the second fluid inflow channel 3052 is in fluid communication with the pressure cavity 307. A diameter or a flow cross-sectional area of the second fluid inflow channel 3052 is less than a diameter or a flow cross-sectional area of the first fluid inflow channel 30444, to implement control of pressure/a flow rate. Therefore, the second fluid inflow channel 3052 is used as a pressure/flow rate control hole, and pressure/a flow rate of the fluid flow channel is adjusted through a change in the diameter (or the flow cross-sectional area) of the second fluid inflow channel. A shape of a cross section of the first fluid inflow channel 30444 and a shape of a cross section of the second fluid inflow channel 3052 are not limited. Preferably, the flow cross-sectional area of the first fluid inflow channel 30444 is twice or more than twice the flow cross-sectional area of the second fluid inflow channel 3052. As shown in FIG. 2, FIG. 4, and FIG. 11, an inlet at a lower end of the fluid outflow channel 3053 is in fluid communication with the pressure cavity 307, and an outlet at an upper end of the fluid outflow channel 3053 is in fluid communication with a fluid relief gap 308.

As shown in FIG. 2, the sealing element 3055 is configured to implement sealing between the balance valve 305 and an inner wall of the housing, so that the balance valve 305 divides the inside of the housing into two spaces that are relatively independent, namely, an upper space and a lower space. In the embodiment shown in FIG. 4, a ring of groove 30512 is formed on an outer side wall of the valve lower base 3051, and the mounting valve shim 3054 and the sealing element 3055 are clamped in the groove 30512. The mounting valve shim 3054 is located at an upper portion, and the sealing element 3055 is located at a lower portion. The mounting valve shim 3054 is used as a leaning portion of the sealing element 3055, to ensure that the sealing element 3055 operates and is deformed according to a set track.

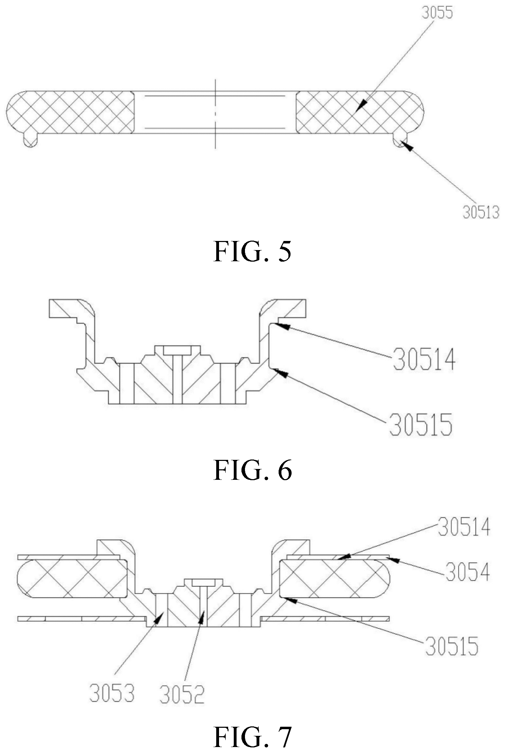

In a preferable implementation, the sealing element 3055 is a flexible annular sealing element 3055, and the valve lower base 3051 includes a support part. The support part penetrates the sealing element 3055. As shown in FIG. 6 and FIG. 7, the support part has a first engaging surface 30514 sealingly engaged with an upper end surface of the sealing element 3055, and has a second engaging surface 30515 sealingly engaged with a lower end surface of the sealing element 3055, and the sealing element 3055 is mounted on the support part through the first engaging surface 30514 and the second engaging surface 30515, to bias the valve member toward a direction of the first pressure chamber 306 by using a force depending on pressure in the second pressure chamber 307. The second engaging surface 30515 and the first engaging surface 30514 are similar to an upper inner side wall and a lower inner side wall of the groove 30512.

Preferably, a diameter of an inner hole of the sealing element 3055 is less than an outer diameter of the support part in fit with the inner hole of the sealing element 3055, and an outer diameter of the sealing element 3055 is greater than an inner diameter of the housing in sealing fit with the sealing element 3055. Such configuration enables the sealing element 3055 to form an interference fit with the support part and the inner wall of the housing.

As shown in FIG. 7, preferably, the support part is provided with a boss on a side facing the first pressure chamber 306, the mounting valve shim 3054 is nested on the boss, at least a part of an upper end surface of the mounting valve shim 3054 abuts against a body of the valve member, and a lower end surface of the mounting valve shim 3054 and an end surface of the boss are jointly used as the first engaging surface 30514 and are sealingly engaged with the sealing element 3055.

A periphery of the sealing element 3055 is in sealing and relatively slidable fit with the inner wall of the housing. In the embodiments shown in FIG. 4 and FIG. 5, an edge of the sealing element 3055 that extends downward is provided with a convex bump 30513. The convex bump 30513 may be configured to control the sealing element 3055 to reduce deformation in a process in which the sealing element 3055 slides up and down, to improve sealing performance and durability.

As shown in FIG. 2, FIG. 8, and FIG. 9, the buffer cavity forming portion 30443 is placed in the mounting space 30511 of the buffer cavity forming portion on the body of the valve lower base 3051. The opening edge 30445 at the lower portion of the buffer cavity forming portion 30443 is placed on the body of the valve lower base 3051, and the inlet at the upper end of the second fluid inflow channel 3052 is located inside the opening edge at the lower portion of the buffer cavity forming portion 30443, to be in fluid communication with the buffer cavity 30446. The sealing elastic valve shim 3056 is arranged between the valve upper housing 3044 (the buffer cavity forming portion 30443) and the valve lower base 3051, so that the fluid in the buffer cavity 30446 does not leak from an assembly gap between the valve upper housing 3044 (the buffer cavity forming portion 30443) and the valve lower base 3051. Specifically, the sealing elastic valve shim 3056 may be arranged along the opening edge 30445 at the lower portion of the buffer cavity forming portion 30443. In this case, the fluid that flows into the buffer cavity through the first fluid inflow channel 30444 can flow to the pressure cavity 307 only through the second fluid inflow channel 3052. As shown in FIG. 4, two support points, namely, an inner support point and an outer support point, are arranged on the valve lower base 3051, and the sealing elastic valve shim 3056 is placed on the two support points. The inner support point is higher than the outer support point. Through differential height arrangement of the support points and elastic cooperation between the support points and the sealing elastic valve shim 3056, sealing performance can be improved.

In an embodiment of the present invention given by way of example in the accompanying drawings, the valve upper housing 3044 and the valve lower base 3051 are of a split structure. A person skilled in the art may understand that, in some other embodiments not shown in the accompanying drawings by way of example, the valve upper housing 3044 and the valve lower base 3051 may be of an integral structure, and the buffer cavity forming portion (30443) is also in sealing fit with the valve lower base (3051) in the integral structure.

As shown in FIG. 2, FIG. 8, FIG. 9, and FIG. 11, the fluid relief gap 308 is provided between an outer wall of the buffer cavity forming portion 30443 and an inner wall of the valve lower base 3051 (the mounting space 30511 of the buffer cavity forming portion 30443), and the fluid relief gap 308 extends from the gap between the valve lower base 3051 and the valve upper housing 3044 to the pressure relief cavity 309. A lower end of the fluid relief gap 308 is in fluid communication with the outlet at the upper end of the fluid outflow channel 3053. The fluid relief gap 308 may be formed by an eccentrical structure of an outer shape of the buffer cavity forming portion 30443, or may be formed by a structure in which a size of an outer shape of the buffer cavity forming portion 30443 is less than a size of the mounting space of the buffer cavity forming portion 30445.

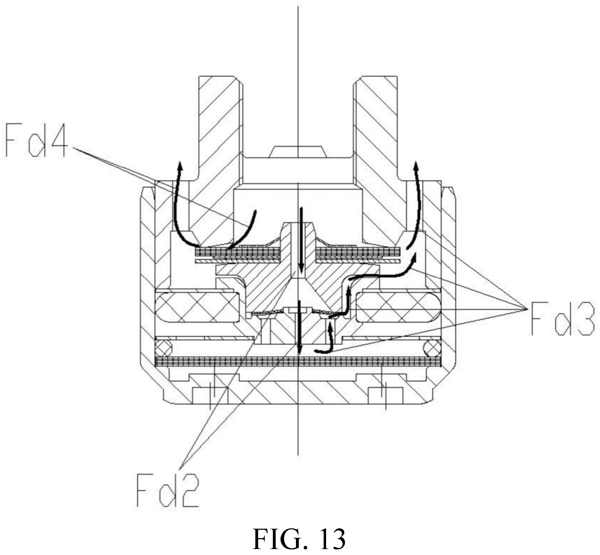

There are a plurality of manners of arranging the fluid outflow channel 3053. In the implementations shown in FIG. 4, FIG. 8, FIG. 11, and FIG. 13, the outlet position at the upper end of the fluid outflow channel 3053 is not covered by the sealing elastic valve shim 3056, and is located on an outer side of an edge of the sealing elastic valve shim 3056. In this case, a fluid relief valve shim 3057 does not need to be arranged at the outlet at the upper end of the fluid outflow channel 3053, and the fluid may directly flow into the fluid relief gap 308 through the fluid outflow channel 3053.

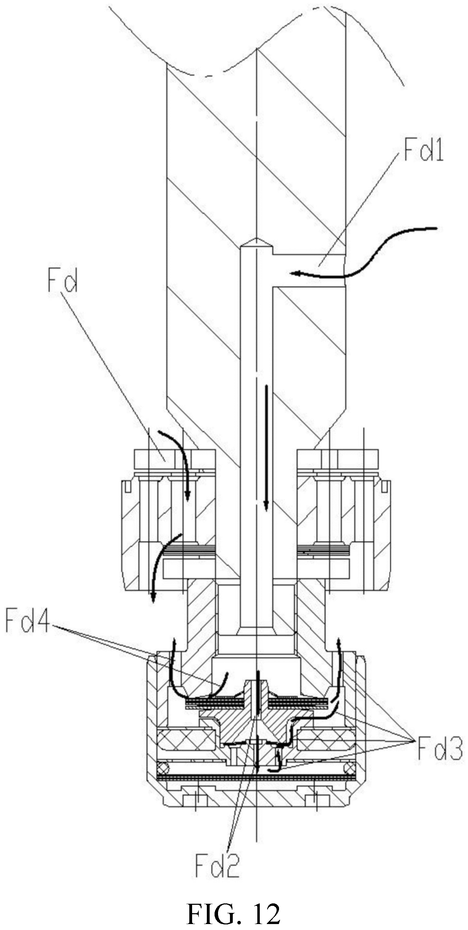

In the implementations shown in FIG. 2, FIG. 9, and FIG. 12, the outlet at the upper end of the fluid outflow channel 3053 is covered by the sealing elastic valve shim 3056, and is located on an inner side of the edge of the sealing elastic valve shim 3056. To enable the sealing elastic valve shim 3056 not to interfere with the flow of the fluid into the fluid relief gap 308 through the fluid outflow channel 3053, as shown in FIG. 9, the fluid relief valve shim 3057 may be arranged at the outlet at the upper end of the fluid outflow channel 3053, and the fluid relief valve shim 3057 is located between the outlet at the upper end of the fluid outflow channel 3053 and the sealing elastic valve shim 3056. Through such fitting between the sealing elastic valve shim 3056 and the fluid relief valve shim 3057, when the shock absorber is in a high-frequency stretching state, the fluid in the pressure cavity may flow into the fluid relief gap 308 through the fluid relief valve shim 3057, and the fluid in the fluid relief gap 308 cannot flow back to the buffer cavity 30466 and the pressure cavity through the sealing elastic valve shim 3056 and the fluid relief valve shim 3057. The fluid relief valve shim 3057 may be a valve shim provided with a flow notch or a flow gap. In this case, the fluid relief valve shim 3057 partially covers the outlet of the fluid outflow channel 3053, and the sealing elastic valve shim 3056 covers the fluid relief valve shim 3057. The fluid in the pressure cavity flows from the fluid outflow channel 3053 into the fluid relief gap 308 through the notch or the gap on the fluid relief valve shim 3057. The fluid relief valve shim 3057 may be a throttle valve. A flow area and a flow rate of the released fluid can be conveniently adjusted through selection and change of a thickness, a width, and a quantity of notches or gaps of the fluid relief valve shim 3057, and a selection range is wide. Therefore, the fluid relief valve shim 3057 is arranged, so that the flow rate, the pressure, and damping can be conveniently, precisely, and stably controlled. In the implementation shown in FIG. 9, the sealing elastic valve shim 3056 is configured to seal the valve lower base and the valve upper housing, that is, ensure that the fluid in the buffer cavity 307 is not leaked. The fluid relief valve shim 3057 ensures that the fluid in the pressure cavity 307 flows into the fluid relief gap 308 through the notch or the gap on the fluid relief valve shim 3057.

For ease of mounting the sealing elastic valve shim 3056 and the fluid relief valve shim 3057, the valve lower base 3051 is provided with a limiting boss or groove around the inlet at the upper end of the second fluid inflow channel 3052. The sealing elastic valve shim 3056 or the fluid relief valve shim 3057 is nested on the limiting boss, or is placed in the limiting groove, to prevent the sealing elastic valve shim 3056 or the fluid relief valve shim 3057 from being displaced relative to the valve lower base 3051.

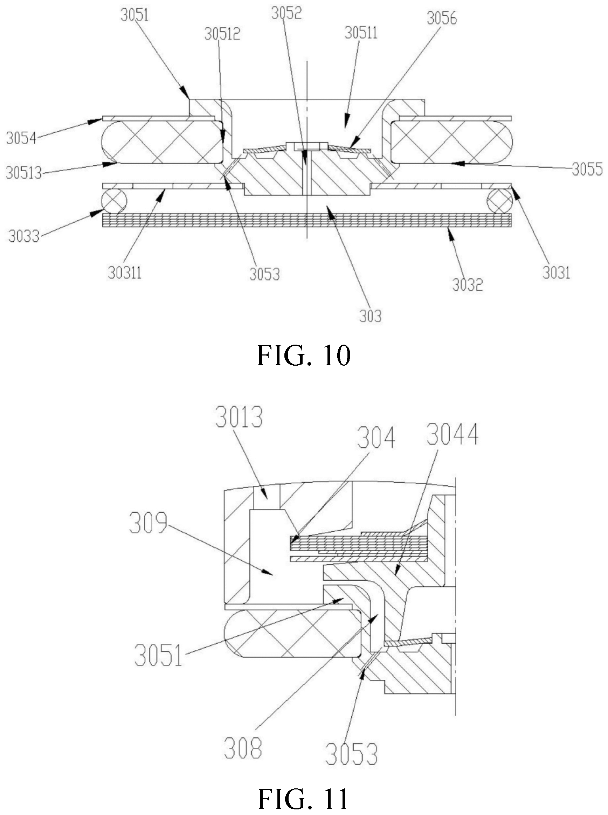

As shown in FIG. 2 and FIG. 10, the movable valve 303 includes a support valve shim unit 3032, a support sealing member 3033, and a spring sheet 3031. The support valve shim unit 3032 is arranged at a bottom portion of the housing. The support sealing member 3033 is placed on the support valve shim unit 3032, a periphery edge of the support sealing member 3033 is in sealing fit with the inner wall of the housing, and the spring sheet 3031 and the support sealing member 3033 may slide and be displaced up and down relative to each other along the inner wall of the housing. The spring sheet 3031 is arranged on the support sealing member 3033. The support sealing member 3033 has a specific thickness, and a specific space is formed between the spring sheet 3031 and the support valve shim unit 3032.

The spring sheet 3031 is provided with a mounting hole used for mounting the valve lower base 3051. A step surface that matches the mounting hole is arranged at a bottom portion of the body of the valve lower base 3051, and the valve lower base 3051 is placed on the mounting hole through the step surface, so that the spring sheet 3031 provides mounting support for the valve lower base 3051 (the balance valve 305). The valve lower base 3051 has a specific height in a height direction. After the balance valve 305 is mounted on the spring sheet 3031 through the valve lower base 3051, there is a specific space between the sealing element 3055 and the spring sheet 3031, that is, the sealing element 3055 is not in contact with the spring sheet 3031, and is designed to be suspended. In this way, pressure establishment is not affected, and a closing force between an outlet of the valve assembly fluid inlet channel 306 and the valve shim unit 3042 is not affected in an operating process, to avoid generation of nonlinear load.

The spring sheet 3031 is further provided with one or more communication holes 30311 communicating an upper side and a lower side of the spring sheet, and a space on the upper side of the spring sheet 3031 is in communication with a space on the lower side of the spring sheet 3031 through the communication hole to form a relatively independent space as the pressure cavity 307. An edge at an upper end of the pressure cavity is sealed by the sealing element 3055, and an edge at a lower end of the pressure cavity 307 is sealed by the support sealing member 3033. After the valve lower base 3051 is mounted on the spring sheet 3031, the outlet at the lower end of the second fluid inflow channel 3052 is in communication with the pressure cavity, and the inlet at the lower end of the fluid outflow channel 3053 is in communication with the pressure cavity 307. The support sealing member (an O-ring) 3033 has a specific thickness, and the spring sheet 3031 is in fit with the support sealing member 3033, so that a lower portion of the spring sheet 3031 has a space for accommodating deformation of the spring sheet 3031, and the valve lower base 3051 (the balance valve 305) is in a suspended state. In this way, pressure establishment is not affected, and the closing force between the outlet of the valve assembly fluid inlet channel 306 and the valve shim unit 3042 is not affected in an operating process, to avoid generation of the nonlinear load.

A position of the inlet at the lower end of the fluid outflow channel 3053 may be set in a plurality of manners. In the embodiments shown in FIG. 4, FIG. 8, FIG. 11, and FIG. 13, the inlet at the lower end of the fluid outflow channel 3053 is located on a side surface of the body of the valve lower base 3051, so that the inlet at the lower end of the fluid outflow channel 3053 is located in the upper space of the spring sheet 3031 in the pressure cavity. In the implementations shown in FIG. 2, FIG. 9, and FIG. 12, the inlet at the lower end of the fluid outflow channel 3053 is located on a bottom surface of the body of the valve lower base 3051, and both the inlet at the lower end of the fluid outflow channel 3053 and the outlet at the lower end of the second fluid inflow channel 3052 point to the lower space of the spring sheet 3031 in the pressure cavity.

As shown in FIG. 2, FIG. 12, and FIG. 13, the bottom portion of the housing is recessed to form a specific space as an accommodating space for deformation of the support valve shim unit 3032. The space is referred to as a balance cavity 3010 in the present invention. A discharge port 3021 is further provided at the bottom portion of the housing, so that the recessed space is in communication with the outside of the valve assembly housing. The discharge port 3021 is configured to discharge air or an oil liquid in the recessed space in a specific case.

As shown in FIG. 2, a limiting support portion 3011 of the mounting valve shim 3054 is arranged on a side wall of the valve assembly housing, and an edge of the upper end surface of the mounting valve shim 3054 in the balance valve 305 partially abuts against the limiting support portion 3011. In the embodiment shown in FIG. 2, the limiting support portion 3011 is formed by an end portion of an upper housing 301. As shown in FIG. 2, the end portion of the upper housing 301 has a planar structure, that is, an end surface of the limiting support portion 3011 that is in fit with the mounting valve shim 3054 is a plane rather than a gradually changing curved surface. An inner side and an outer side of an end surface at the end portion of the upper housing are set as R-angle structures. That is, places (corners of the end surface of the end portion of the upper housing) at which transitions occur between the end surface at the end portion of the upper housing and an inner side wall of the upper housing and between the end surface at the end portion of the upper housing and an outer side wall of the upper housing are set as the R-angle structures. That is, an inner side and an outer side (corners) of the limiting support portion 3011 are set as R-angle structures. The R-angle structure on the outer side of the end surface at the end portion of the upper housing is close to an inner side wall of a lower housing, and is used as a guide structure when the upper housing and the lower housing are assembled. The R-angle structure on the inner side of the end surface at the end portion of the upper housing faces an internal space of the housing. That is, a corner at which the transition occurs between the end surface at the end portion of the upper housing and the inner side wall of the upper housing is set as the R-angle structure, which provides a smooth support point for the mounting valve shim 3054 in a movement process. During assembly, the end surface at the end portion is used as the mounting limiting portion 3011 of the mounting valve shim 3054, and when the mounting valve shim 3054 and the sealing element 3055 are displaced along the inner wall of the housing, the R-angle structure facing a side of the internal space of the housing is used as the smooth support point for vertical movement of the mounting valve shim 3054 and the sealing element 3055. After the FAD valve assembly is assembled, the control valve and a top portion of the housing have a specific closing force, and the control valve, the balance valve, and the movable valve have a specific deformation preloading requirement. In this case, a deformation support point of the balance valve has a feature of an inner R-angle on an inner side. In an operating process, under a low-frequency condition, the FAD valve assembly does not operate, and the balance valve tends to deform upward. The R angle on the inner side provides the smooth upward support point for the mounting valve shim and the sealing element of the balance valve.

As shown in FIG. 2, an inner wall at the top portion of the valve assembly housing is provided with a fitting portion 3012 in fit with an upper side of the valve shim unit 3042. After the upper side of the valve shim unit 3042 abuts against and is in fit with the fitting portion 3012, there is a closing force of a specific value and sealing performance between the control valve 304 (the valve shim unit 3042) and the fitting portion 3012. Specifically, the fitting portion 3012 in fit with the upper side of the valve shim unit 3042 is formed by an outlet edge of the valve assembly fluid inlet channel 306, and a cross-sectional area of the valve assembly fluid inlet channel 306 is greater than the cross-sectional area of the first fluid inflow channel 30444. The valve assembly fluid inlet channel 306 extends from the upper housing 301 to the inside of the housing until forming a closing force fitting relationship with the control valve 304 (the valve shim unit 3042). Preferably, the fitting portion is located at a position of the valve shim unit 3042 close to a periphery.

As shown in FIG. 2, the cross-sectional area of the valve assembly fluid inlet channel 306 may change step by step. For example, an internal cavity of the valve assembly fluid inlet channel 306 changes in a step manner. That is, a cross-sectional area of a part closer to the control valve 304 is larger, and a space is larger, so that a space change structure is formed, and the space change structure is used as buffer of inflow pressure of the fluid.

The foregoing describes a component combination and a structure of the FAD valve assembly 300 of the present invention. Next, an assembly process of the FAD valve assembly 300 is described.

During assembly, the movable valve 303 is first mounted. First, the support valve shim unit 3032 is placed at a bottom portion of the lower housing 302. During mounting, air or an oil liquid at the bottom portion of the housing may be discharged through the discharge port 3021, to avoid affecting mounting of the support valve shim unit 3032 in place. Because the bottom portion of the lower housing 302 is recessed, a space is formed between the bottom portion of the lower housing 302 and the support valve shim unit 3032, to provide a space for deformation of the support valve shim unit 3032 when the support valve shim unit 3032 is deformed downward under a pressure action of the fluid, and provide pressure balance during deformation of the support valve shim unit 3032. The space is referred to as a balance cavity 3010 in the present invention. The support sealing member (the O-ring) 3033 is arranged on the support valve shim unit 3032, and the spring sheet 3031 is arranged on the support sealing member (the O-ring) 3033. The support sealing member is configured to seal the support valve shim unit 3032 and an inner wall of the lower housing 302. In this case, mounting of the movable valve 303 is completed.

Next, the balance valve 305 is mounted. The valve lower base 3051 is placed on the spring sheet 3031, and the step surface at the bottom portion of the body of the valve lower base 3051 matches the mounting hole of the spring sheet 3031, so that the spring sheet 3031 provides mounting support for the valve lower base 3051 (the balance valve 305). The sealing element 3055 is in sealing and slidable fit with the inner wall of the lower housing 302. Because the spring sheet 3031 is provided with the communication hole communicating two sides, a relatively independent space is formed between the balance valve 305 and the support valve shim unit 3032. An upper portion of the space is sealed by the sealing element 3055 and the inner wall of the housing, and a lower portion of the space is sealed by the support sealing member 3033 and the inner wall of the housing. The space is referred to as the pressure cavity 307 or the second pressure chamber 307 in the present invention. The upper portion of the second pressure chamber 307 is sealed by the sealing element 3055 and the inner wall of the housing. Therefore, the second pressure chamber 307 is defined by the flexible annular sealing element 3055 on a side facing the first pressure chamber 306.

Next, the control valve 304 is mounted. The buffer cavity forming portion 30443 is placed in the mounting space of the buffer cavity forming portion 30443 on the body of the valve lower base 3051. The sealing elastic valve shim 3056 is arranged on the opening edge at the lower portion of the buffer cavity forming portion 30443, so that the opening edge at the lower portion of the buffer cavity forming portion 30443 is in sealing fit with the body of the valve lower base 3051, to form the sealed buffer cavity 30446. The inlet at the upper end of the second fluid inflow channel 3052 is in flow communication with the buffer cavity 30446. After the buffer cavity forming portion 30443 is placed in the mounting space of the buffer cavity forming portion on the body of the valve lower base 3051, there is the fluid relief gap 308 between the valve upper housing 3044 and the valve lower base 3051, and the fluid relief gap 308 is in fluid communication with the fluid outflow channel 3053. A portion at the lower portion of the valve upper housing 3044 that is assembled with and is in fit with the bottom portion of the valve lower base 3051 is sealed by the sealing elastic valve shim 3056, so that the fluid in the buffer cavity can flow into the pressure cavity 307 only through the first fluid inflow channel 30444, to prevent the fluid in the buffer cavity 30446 from leaking to another space or cavity through the assembly gap between the valve upper housing 3044 and the valve lower base 3051, affecting pressure establishment and pressure maintenance.

The upper housing 301 is mounted into the lower housing 302 after the valve upper housing 3044 is mounted on the valve lower base 3051. After the upper housing 301 is mounted in place, the limiting support portion 3011 at the end portion of the upper housing 301 abuts against and is in fit with an end surface of the upper end surface of the mounting valve shim 3054. The outlet edge of the valve assembly fluid inlet channel 306 on the upper housing 301 abuts against and is in fit with an upper end surface of the valve shim unit 3042.

After the valve upper housing 3044 is mounted in place, a relatively independent space is formed among the balance valve 305 (the mounting valve shim 3054), the control valve 304, and the inner wall (the upper housing 301) of the valve assembly housing, to be used as the pressure relief cavity 309. The pressure relief cavity 309 is in communication with the outside of the valve assembly housing through a fluid relief hole 3013 provided on the upper housing 301.

The upper housing 301 is fixedly connected to the lower housing 302 after the valve upper housing 3044 is mounted on the valve lower base 3051. Under a fitting action of a pre-tightening force among the support valve shim unit 3032, the support sealing member 3033, and the spring sheet 3031, an upper side of the valve shim unit 3042 abuts against and is in fit with an inner wall at a top portion of the upper housing 301, and a closing force of a specific value and sealing performance are formed between the control valve 304 and the outlet edge of the valve assembly fluid inlet channel 306. A magnitude of the closing force may be adjusted according to material properties of the support valve shim unit 3032, the support sealing member 3033, and the spring sheet 3031, an assembly relationship among the support valve shim unit 3032, the support sealing member 3033, and the spring sheet 3031, the pre-tightening force among the support valve shim unit 3032, the support sealing member 3033, and the spring sheet 3031, and the like. In this case, because the valve shim unit 3042 in the control valve 304 is sealed with the upper housing 301 (the outlet edge of the valve assembly fluid inlet channel 306), and the sealing element 3055 in the balance valve 305 is in sealing fit with the inside of the lower housing 302, a relatively independent space is formed among the balance valve 305, the control valve 304, and the inner wall of the valve assembly housing. The space is referred to as a pressure relief cavity 309 in the present invention.

After assembly is completed, space structures such as the valve assembly fluid inlet channel 306, the buffer cavity 30446, the pressure cavity 307, the pressure relief cavity 309, and the balance cavity 3010 are formed inside the FAD valve assembly 300. The valve assembly fluid inlet channel 306, the first fluid inflow channel 30444, the buffer cavity 30446, the second fluid inflow channel 3052, the pressure cavity 307, the fluid outflow channel 3053, and the pressure relief cavity 309 are sequentially in fluid communication with each other to form a fluid channel. Specifically, the fluid in the valve assembly fluid inlet channel 306 may enter the buffer cavity 30446 through the first fluid inflow channel 30444 in the control valve 304, and the fluid in the buffer cavity 30446 enters the pressure cavity 307 through the second fluid inflow channel 3052 in the balance valve 305. The fluid in the pressure cavity 307 may enter, through the fluid outflow channel 3053 in the balance valve 305, the fluid relief gap 308 between the control valve 304 and the balance valve 305. Then, the fluid in the pressure cavity 307 enters the pressure relief cavity 309 through the fluid relief gap 308. The fluid in the pressure relief cavity 309 may flow to the outside of the valve assembly housing through the fluid relief hole 3013. In a flow route through which the fluid enters from the valve assembly fluid inlet channel 306 and flows out of the valve assembly housing through the fluid relief hole 3013, each section, including the first fluid inflow channel 30444, the second fluid inflow channel 3052, the fluid outflow channel 3053, the fluid relief gap 308, and the fluid relief hole 3013, is of an always-open hole design. In addition, the flow route as a whole is presented as a circulating flow route, that is, the flow route enters the inside of the valve assembly from an upper end of the valve assembly, but does not flow out from a lower end of the valve assembly 300, and the fluid does not flow back from the lower end of the valve body into the inside of the valve body. In comparison to the related art, pressure establishment or closing force establishment is not affected.

In a process in which the fluid flows into the pressure cavity 307, the internal pressure in the pressure cavity 307 and the internal pressure in the valve assembly are gradually established. The internal pressure in the pressure cavity 307 acts upward on the balance valve 305, and is conducted to the control valve 304 through the balance valve 305. In this case, a closing force exerted between the outlet of the valve assembly fluid inlet channel 306 and the valve shim unit 3042 is a sum of a pre-tightening force provided by the support valve shim unit 3032, the spring sheet 3031, the valve shim unit 3042, and the like and the internal pressure in the pressure cavity. That is, the closing force in this case comes from two parts. One part of the closing force is a pre-tightening force determined by a structure of the valve assembly, and the pre-tightening force is provided through an assembly relationship among the support valve shim unit 3032, the spring sheet 3031, the valve shim unit 3042, the upper housing, and the lower housing, elastic properties of materials of the support valve shim unit 3032, the spring sheet 3031, the valve shim unit 3042, the upper housing, and the lower housing, and the like. The other part of the closing force is the internal pressure that is formed after the fluid flows into the pressure cavity and the pressure is established. Pressure of a specific value is established in the pressure cavity, and the pressure pushes the balance valve 305 and the control valve 304 upward, to strengthen a closing force of the control valve 304. In short, at an early stage of pressure establishment, the closing force is provided by the pre-tightening force, and after the fluid flows into the pressure cavity, the closing force is provided by both the pre-tightening force and the internal pressure. In this case, the control valve 304 can be opened only when the pressure in the valve assembly fluid inlet channel 306 is greater than the closing force formed by the foregoing two parts. A magnitude of the pre-tightening force, a specific value of the pressure, a magnitude of the closing force, and the like may be specifically set according to a damping requirement. Because the closing force provided by the pre-tightening force always exists (and therefore, the closing force may also be referred to as an initial closing force), and the first fluid inflow channel 30444 is of an always-open-open design, the fluid in the valve assembly fluid inlet channel 306 first flows into the first fluid inflow channel 30444 instead of flowing out from the flow route Fd4 by opening the control valve 304.

When the control valve 304 is opened, that is, the control valve 304 is displaced downward, a gap between the valve shim unit 3042 and the outlet edge of the valve assembly fluid inlet channel 306 is opened, and a part of the fluid in the valve assembly fluid inlet channel 306 may directly flow from the flow route Fd4 into the pressure relief cavity 309 through the opened gap.

In the present invention, a reason why the valve 304 is referred to as the control valve is that one function of the control valve 304 is to control opening and closing of the gap between the valve shim unit 3042 and the outlet edge of the valve assembly fluid inlet channel 306. Certainly, the control valve 304 further has other functions such as providing a fluid channel and a buffer cavity, and the other functions are not limited or ambiguous because the valve is referred to as the control valve 304. In the present invention, a reason why the value 305 is referred to as the balance value 305 is that one function of the balance value 305 is to isolate the fluid relief cavity from the pressure cavity, so that the pressure in the pressure cavity can be more precisely and rapidly established. Certainly, the balance valve 305 further has other functions such as providing a fluid channel. The other functions are not limited or ambiguous because the valve is referred to as the balance valve 305. In the present invention, a reason why the valve 303 is referred to as the movable valve 303 is that one function of the movable valve 303 is to provide a deformation space for the pressure cavity. Certainly, the movable valve 303 further has other functions such as providing support, and the other functions are not limited or ambiguous because the valve is referred to as the movable valve 303.

In the present invention, all the control valve 304, the balance valve 305, and the movable valve 303 can be displaced up and down inside the assembly housing, and are movable components. In the movable valve 303, the support valve shim unit 3032 is sealed with the inner wall of the assembly housing through the support sealing member 3033, but the support sealing member 3033 and the spring sheet 3031 may be displaced relative to the inner wall of the assembly housing. For example, when the fluid pressure in the pressure cavity reaches a degree, or the control valve 304 is moved downward, a middle portion of the support valve shim unit 3032 and/or the spring sheet 3031 descends, and an edge of the support valve shim unit 3032 and/or the spring sheet 3031 ascends, or the support sealing member 3033 and the spring sheet 3031 are relatively moved downward as a whole along the inner wall of the assembly housing. The sealing element 3055 in the balance valve 305 is sealed with the inner wall of the housing. When the control valve 304 is moved downward, the balance valve 305 is pushed downward. In this case, the sealing element 3055 and the mounting valve shim 3054 are moved downward along the inner wall of the assembly housing, and the valve lower base 3051 is also moved downward.

A diameter (a flow cross-sectional area) of the fluid inflow channel 30444 is less than a diameter (a flow cross-sectional area) of the valve assembly fluid inlet channel 306, and a diameter (a flow cross-sectional area) of the first fluid channel 3052 is less than a diameter (a flow cross-sectional area) of the fluid inflow channel 30444. Therefore, a process in which the fluid sequentially flows from the valve assembly fluid inlet channel 306, the first fluid inflow channel 30444, the buffer cavity, and the second fluid inflow channel 3052, and finally enters the pressure cavity is a process in which pressure and damping are gradually established.

In an assembly process of the FAD valve assembly 300, the upper housing 301 and the lower housing 302 are assembled in a manner of controlling the pre-tightening force. The pre-tightening force is set, so that tolerance stack-up of components is eliminated, and stability of a damping force is improved.

On the valve upper housing 3044, the always-open hole is used as the first fluid inflow channel 30444, and the outlet at the lower end of the first fluid inflow channel 30444 is connected to the buffer cavity that is expanded spatially. The structural design satisfies a mold forming solution in which a powder metallurgy material, a metal injection material, and a composite material are used, and improves stability of the FAD valve assembly and the shock absorber.

The second fluid inflow channel 3052 is used as an input pressure and flow rate control hole of the valve lower base 3051, and has a high precision requirement. Product stability may be improved by designing a short hole and a mold forming solution.

In the present invention, a problem of durability attenuation of the support spring sheet in the related art is avoided. The sealing element 3055 and the valve lower base 3051 are mounted in a groove manner, and the sealing element 3055 is in fit with the spring sheet 3031 in a suspending manner, to avoid nonlinear increase in load, satisfy the sealing performance and ensure durability and support performance, and improve durability of the valve assembly and stability of the damping.

In this implementation, according to a requirement of a force value of the valve assembly, different closing forces are implemented through a combination of a quantity of valve shims, a thickness of the valve shim, and a material of the valve shim in the valve shim unit 3042, different closing force designs are provided, and different damping requirements are implemented.

In an aspect of the sealing performance design, the control valve 304 leans against a leaning and fitting portion of the inner wall of the upper housing 301 through an upper end of the valve shim unit 3042 thereof. The control valve 304 is in fit with the upper housing 301, to implement sealing under the closing force. In this case, the control valve 304 is in a closed state. After the fluid in the shock absorber flows into the valve assembly fluid inlet channel 306 through the FAD inlet channel 400 in the valve rod, because the valve shim unit 3042 is sealed with the inside of the upper housing 301 under the closing force, pressure is established in the valve assembly fluid inlet channel 306 after the fluid flows into the valve assembly fluid inlet channel 306.

Although the control valve 304 is sealed with the inside of the upper housing 301 through the valve shim unit 3042 under the closing force, a flow gap may be opened between the control valve 304 and the upper housing 301. In this case, the control valve 304 is in an open state. Specifically, after the internal pressure in the valve assembly fluid inlet channel 306 reaches a degree, the fluid in the valve assembly fluid inlet channel 306 pushes the control valve 304 to move downward, the closing force between the valve shim unit 3042 and the outlet edge of the valve assembly fluid inlet channel 306 decreases or even disappears, a gap Fd4 between the valve shim unit 3042 and the outlet edge of the valve assembly fluid inlet channel 306 is opened, and the fluid enters the pressure relief cavity through the gap. Whether the control valve 304 is opened and a size of the opened flow channel depend on a magnitude of the closing force between the control valve 304 and the upper housing 301.

The fixing component 3041 is in fit with the valve upper housing 3044, and is configured to fix the valve shim unit 3042 and the limiting valve shim 3043, to improve reliability and durability. The fixing component 3041 may be designed in a manner of press riveting and anti-loosening, for example, by using a spring clip.

The valve shim unit 3042 may be formed by stacking valve shims of different outer diameters and thicknesses. Specifically, the valve shim unit 3042 is designed in a stacking manner with reference to a closing force requirement, and the valve shim unit 3042 may be stacked in a cylindrical or pagoda-shaped structure. A functional material is comprehensively considered, and an elastic material is selected to design the limiting valve shim 3043 to provide an assembly limit for the valve shim unit 3042. A thickness and an outer diameter of the limiting valve shim 3043 are adapted to an outer diameter and a thickness of the valve shim unit 3042, and the limiting valve shim 3043 is made of the elastic material.

The sealing element 3055 and the support sealing member 3033 are sealed with the inner wall of the assembly housing, to achieve an isolation effect. In an establishment process in which the fluid flows into the pressure cavity, pressure leakage in the pressure cavity is avoided, affecting stability of the damping force.

The support sealing member 3033 may be the O-ring. An upper end of the O-ring supports the spring sheet 3031, a lower end of the O-ring is placed on the support valve shim unit 3032, and an outer side leans against the lower housing 302 and is sealed with the inner wall of the lower housing 302. The O-ring 3033 is made of an elastic material, and has elastic deformation, to provide an up-and-down movable displacement for the balance valve 305. Through a design of a material, rigidity, and an O-ring structure, a support force of the balance valve 305 changes linearly, and the support force is transmitted to the control valve and the closing force of the control valve is increased. The O-ring 3033 is made of the elastic material, and in a process in which the pressure in the pressure cavity is increased and decreased, space increase and decrease brought by elastic deformation is provided. The O-ring 3033 is further in fit with the lower housing 302 to provide sealing performance between the pressure cavity and the balance cavity.

An outer side of the balance valve 305 is in fit with the lower housing 302, to provide the sealing performance between the pressure cavity and the balance cavity, and satisfy pressure establishment in the pressure cavity.

An upper end of the support valve shim unit 3032 supports the O-ring 3033, and a lower end of the support valve shim unit 3032 leans against the lower housing 302. The closing force of the control valve 304 is increased through design changes in the material, the thickness, and the quantity of the support valve shim unit 3032, to further bring increase and decrease in the damping force.

A middle position of the valve upper housing 3044 is provided with the fluid inlet channel 3052, a position on an outer side of the valve upper housing 3044 is provided with at least one oil liquid outlet gap, and a bottom portion of the valve upper housing 3044 is provided with a fluid pressure buffer cavity. The valve upper housing 3044 is provided with a fluid inlet flow channel in a shape of a cylinder-shaped hole (other shapes are also feasible), and based on a size of the channel and precision control, stable flow and pressure establishment of the fluid are provided. An oil liquid relief channel is designed at the lower end of the valve upper housing 3044, to implement an oil inflow and outflow circulation design. An area of the fluid relief channel needs to be comprehensively matched with an area of the oil liquid inlet channel 3052 of the valve upper housing 3044 and an area of an oil liquid hole of the balance valve 305. With reference to a structure and functionality, a metal injection design, a powder metallurgy design, or a composite material design is used.

The oil liquid inlet channel 3052 and the oil liquid outlet channel 3053 are provided at positions inside the valve lower base 3051, and there is at least one oil liquid inlet channel 3052 and at least one oil liquid outlet channel 3053. The oil liquid inlet flow channel in a shape of a cylinder-shaped hole is designed in the valve lower base 3051, and based on a size of the channel and precision control, stable flow and pressure establishment of the oil liquid are provided.

An internal structure of the valve lower base 3051 enables the sealing elastic valve shim 3056 and the fluid relief valve shim 3057 to be closed, to ensure sealing performance thereof.

The fluid relief valve shim 3057 is configured as a throttle valve. The fluid relief valve shim 3057 is in fit with the sealing elastic valve shim 3056, so that during stretching or compressing of the shock absorber, the fluid flows unidirectionally. For example, during stretching of the shock absorber, the oil liquid can be prevented from flowing back.

An assembly structure is arranged at a position on an outer side of the valve lower base 3051, to provide assembly leaning for the mounting valve shim 3054 and the sealing element 3055.

A leaning module is arranged inside the upper housing 301, to provide assembly leaning for the mounting valve shim 3054. The leaning module on the upper housing 301 is arranged in a shape of a plane, and inner and outer sides are set as R angles, to provide a smooth support point for vertical movement of the mounting valve shim 3054 and the sealing element 3055

The mounting valve shim 3054 leans on the sealing element 3055, an inner side of the sealing element 3055 leans against the valve lower base 3051, and an outer side of the sealing element 3055 leans against the inner wall of the lower housing 302. The sealing element 3055 provides sealing performance between the pressure cavity and the inside of the pressure relief cavity. The sealing element 3055 may use an elastic sealing element 3055.

The support valve shim unit 3032 is arranged below the O-ring 3033, and the O-ring 3033 provides sealing performance between the pressure cavity and a lower portion of the support valve shim unit 3032.

A leaning module and a space changing module are arranged inside the lower housing 302. The leaning module provides assembly leaning for the support valve shim unit 3032, and the space changing module provides a space for accommodating deformation of the support valve shim unit 3032 that is caused by a change in pressure in the pressure cavity.

An exhaust/oil drain hole is provided on a housing of the lower housing 302, used for discharging gas and draining an oil liquid when the space for accommodating the deformation of the support valve shim unit 3032 that is caused by the change in the pressure in the pressure cavity is provided.

The support valve shim unit 3032 includes at least four support plates, and the support plate is made of an elastic material.

The FAD valve assembly 300 in the present invention is used as a component of a shock absorber. FIG. 1 shows an embodiment of a shock absorber using a FAD valve assembly 300 according to the present invention. The shock absorber includes a piston rod 100, a first support gasket 200, a FAD valve assembly 300, a FAD inlet channel 400, a flow valve assembly 500, a piston assembly 600, a restoring valve assembly 700, and a second support gasket 800. The FAD valve assembly is in communication with the piston assembly, and strength of a closing force of the FAD valve assembly is greater than strength of a closing force of the piston assembly.

The piston assembly is nested on an outer side wall of the piston rod 100, a bottom end of the piston rod 100 is provided with the FAD valve assembly 300, and the restoring valve assembly 700 and the flow valve assembly 500 are separately arranged inside the piston assembly 600. The FAD inlet channel 400 runs through the piston rod 100, and is in fluid communication with the FAD valve assembly 300. The first support gasket 200 is nested on the outer side wall of the piston rod 100. The second support gasket 800 is connected to the restoring valve assembly 700, and is located inside the piston assembly 600.

In this implementation, the bottom end of the piston rod 100 is in threaded connection with the FAD valve assembly 300, the FAD inlet channel 400 located inside the piston rod 100 is connected by using a transverse through hole and a longitudinal through hole. The transverse through hole is used for oil liquid flow rate control, a size of the hole is matched according to a requirement of a damping system, and a cross-sectional area of the hole is linearly increased from the outer wall of the piston rod 100 to the inside. The longitudinal hole is designed for oil liquid flow. A cross-sectional area of the longitudinal hole is greater than a maximum cross-sectional area of the transverse through hole. In addition, the longitudinal through hole is spread out in a tapered structure at an end portion of the bottom end of the piston rod 100, to provide a larger oil liquid flow space, and implement balance and stability of pressure. The outer side wall at the bottom end of the piston rod 100 is fixed with an inner side wall at an inlet of the FAD valve assembly 300 through threaded fitting. The fixing through threaded fitting ensures durability. A tooth-shaped design may provide a design of a standard-type anti-loosening design and a threaded adhesive anti-loosening design, or a self-locking anti-loosening design. A standardized threaded length design ensures durability and reliability, and applicability of different vehicle model solutions is considered.

The restoring valve assembly 700 is configured to provide restoring damping in a low-frequency operation condition. Valve shims with different outer diameters and thicknesses made of different materials form different restoring valve assemblies 700, to implement different damping requirements, so as to match different vehicle model requirements. In addition, planar designs on two ends of the restoring valve assembly 700 and an elastic material design of the restoring valve assembly 700 are used to ensure sealing performance of a restoring end of the piston assembly 600.

An upper end and a lower end of the piston assembly 600 respectively lean against the flow valve assembly 500 and the restoring valve assembly 700, and are respectively configured to provide compression damping and the restoring damping in the low-frequency operation condition. Hole designs and step difference designs of different piston assemblies 600 implement different damping requirements. In terms of structure, a powder metallurgy design is used, and in terms of periphery, a PTFE material plastic coating is used, to control sealing performance for isolation between an upper cavity and a lower cavity.

When the restoring valve assembly 700 opens, one end of the second support gasket 800 limits an opening height of the restoring valve assembly 700, to improve durability performance. In combination with a function requirement, the other end of the second support gasket 800 is in effective contact with the FAD valve assembly 300. The second support gasket 800 is made of a hard powder metallurgy material or a stamped material.

When the flow valve assembly 500 opens, an opening height of the flow valve assembly 500 is limited by the first support gasket 200, to improve durability performance. In combination with a function requirement, the first support gasket 200 is made of a hard powder metallurgy material or a stamped material. The flow valve assembly 500 is configured to provide compression damping in a low-frequency operation condition. Valve shims with different outer diameters, and with different thicknesses made of different materials form different flow valve assemblies 500, to implement different damping requirements, so as to match different vehicle model requirements. In addition, planar designs on two ends of the flow valve assembly 500 and an elastic material design of the flow valve assembly 500 are used to ensure sealing performance of a flow end of the piston assembly 600.

The FAD valve assembly 300 is arranged, so that the sealing element 3055 and the valve lower base 3051 are supported by a support spring sheet 3031, and a suspending interference design is used, to satisfy sealing performance and ensure durability and support performance, thereby improving product durability and stability.

The following describes an operating principle and an operating process of the FAD valve assembly 300 in detail with reference to the foregoing shock absorber.

An oil liquid flow route in the shock absorber includes a route Fd, a route Fd1, a route Fd2, a route Fd3, and a route Fd4. A first fluid inflow channel 30444, a buffer cavity 30446, and a second fluid inflow channel 3052 form the route Fd2. A fluid in an oil liquid inlet channel 306 flows into a pressure cavity 307 through the route Fd2. A fluid outflow channel 3053, a fluid relief gap 308, a pressure relief cavity 309, and a fluid relief hole 3013 form the route Fd3. The fluid in the pressure cavity 307 flows out of the valve assembly housing through the route Fd3. The route Fd4 is a route through which after the control valve 304 is opened, the fluid in the oil liquid inlet channel 306 directly flows into the pressure relief cavity 309 through a gap between a valve shim unit 3042 and an outlet edge of the valve assembly fluid inlet channel 306, and finally flows out of the valve assembly housing through the fluid relief hole 3013.

In this implementation, operating statuses of the shock absorber and the FAD valve assembly 300 are as follows:
Case 1: Low-frequency stretching and relatively low internal transient pressure

When a frequency is relatively low and internal transient pressure is relatively low in a stretching process of the shock absorber, and when internal pressure in the shock absorber is greater than a closing force of the piston assembly 600 and a closing force of the restoring valve assembly 700, and is less than a dynamic closing force and a static closing force of the FAD valve assembly 300, an oil liquid of the shock absorber flows through the route Fd. A flow rate of the oil liquid in the route Fd generates a damping force through the piston assembly 600. Energy needed by a damping system is mainly provided by the piston assembly 600. In this case, the FAD valve assembly 300 does not function. Because the first fluid inflow channel 30444, the second fluid inflow channel 3052, and the like in the FAD valve assembly 300 are all of an always-open hole design, a trace amount of oil liquid may enter a fluid channel. In this case, a specific flow route of the oil liquid is: entering the FAD valve assembly 300 through the route Fdl, entering the pressure cavity 307 through the route Fd2, and finally flowing out of the FAD valve assembly 300 through the route Fd3. Because in this case, there is a trace amount of oil liquid entering the FAD valve assembly 300, and damping generated after the trace amount of oil liquid enters the FAD valve assembly 300 is also of a trace amount, the trace amount of damping may be ignored for an overall damping requirement of the shock absorber. That is, an overall damping force of the shock absorber is not affected. In combination with a requirement of a damping system, an overall actual operating damping force of the shock absorber may be designed through model selection, namely, low-frequency damping. This case is only a state presented because a flow route is of an always-open design after the FAD valve assembly 300 in the present invention is used. Because the trace amount of damping can be ignored, this state is not an operating case targeted by the present invention.

### Case 2: Low-frequency stretching and infinitely large internal pressure

When the shock absorber is in a low-frequency state in the stretching process, but an operating speed and internal pressure of the shock absorber are infinitely large (during actual application, this case occurs only in an extreme case, and generally does not occur), the internal pressure of the shock absorber is greater than a closing force of the piston assembly 600, a closing force of the restoring valve assembly 700, and a dynamic closing force and a static closing force of the FAD valve assembly 300, and a part of oil liquid of the shock absorber flows through the route Fd of the piston assembly 600. A flow rate of the oil liquid in the route Fd generates a damping force through the piston assembly 600. The other part of oil liquid generates the damping force through the FAD valve assembly 300. In this case, an oil liquid flow route of the FAD valve assembly 300 is as follows: The oil liquid enters the FAD valve assembly 300 through the route Fd1, the control valve 304 is opened, and the oil liquid flows out through the route Fd4. In addition, a part of oil liquid flows through the route Fd2, and finally flows out through the route Fd3. In the foregoing case, the operating speed of the shock absorber is extremely high, and such an operating condition hardly occurs during actual application. This case is only a theoretical extreme case, and is not an operating case targeted by the present invention.

### Case 3: Low-frequency compression

When the shock absorber is in a compression process at a relatively low frequency, the FAD valve assembly 300 does not function. The FAD valve assembly 300 is of an oil liquid circulation always-open hole design. A part of oil liquid flows, which reduces some compression damping, but the compression damping is of a trace amount, which may be ignored, and does not affect the overall damping force of the shock absorber. In this case, an oil liquid flow route of the FAD valve assembly 300 is: The oil liquid reversely enters the FAD valve assembly 300 through the route Fd3, and reversely enters the route Fd2, and finally reversely flows out through the route Fdl. This case is only a state presented because a flow route is of an always-open design after the FAD valve assembly 300 in the present invention is used. Because the trace amount of damping can be ignored, this state is not an operating case targeted by the present invention.

### Case 4: High-frequency stretching

When the shock absorber is in a stretching process at a relatively high frequency, and internal transient pressure is relatively large, internal pressure of the shock absorber is greater than a closing force of the piston assembly 600, a closing force of the restoring valve assembly 700, and a dynamic closing force of the FAD valve assembly 300. In this case, the piston assembly 600 and the FAD valve assembly 300 jointly provide a damping force, namely, high-frequency damping. A part of oil liquid in the shock absorber flows through the route Fd, and a flow rate of the oil liquid in the route Fd generates a damping force through the piston assembly 600 and the restoring valve assembly 700. The other part of oil liquid in the shock absorber flows through the route Fdl, and a flow rate of the oil liquid in the route Fd1 provides the damping force through the FAD valve assembly 300. In this case, an oil liquid flow route of the FAD valve assembly 300 is as follows: The oil liquid enters the FAD valve assembly 300 through the route Fd1, and the shock absorber does not immediately switch to a high-frequency stretching state. There is a transition process from a low frequency to a high frequency. In this transition process, pressure in a cylinder of the shock absorber and pressure in the valve assembly fluid inlet channel 306 are also gradually established and increased. At an early stage of establishing the pressure in the valve assembly fluid inlet channel 306, the pressure is less than an initial closing force of the control valve 304 that is provided by a pre-tightening force. In addition, the route Fd2 is of an always-open hole design. The oil liquid enters the route Fd2 through the route Fd1, and then enters the pressure cavity through the route Fd2. The pressure in the pressure cavity starts to be established, and the pressure in the pressure cavity also provides the closing force for the control valve 304. After the shock absorber enters the high-frequency stretching state, an increase speed and an establishment speed of the pressure in the cylinder of the shock absorber or the pressure in the valve assembly fluid inlet channel 306 are greater than an increase speed and an establishment speed of the pressure in the pressure cavity. When the oil liquid pressure in the valve assembly fluid inlet channel 306 is greater than a sum of the closing force provided by the pre-tightening force and the closing force provided by the pressure in the pressure cavity, the oil liquid pressure in the valve assembly fluid inlet channel 306 pushes the control valve 304 to move downward, a gap between an outlet of the valve assembly fluid inlet channel 306 and the valve shim unit 3042 is opened, and a part of oil liquid in the valve assembly fluid inlet channel 306 flows out through the route Fd4. After the route Fd4 is opened, the other part of oil liquid in the valve assembly fluid inlet channel 306 continues to enter the pressure cavity through the route Fd2. The pressure in the pressure cavity is gradually increased. The pressure in the pressure cavity continues to provide the closing force for the control valve 304. The closing force exerted on the control valve 304 is gradually increased accordingly and further controls an opening height of the FAD valve assembly 300. In this process, the oil liquid in the pressure cavity flows out through the route Fd3. The high-frequency stretching state is an operating case targeted by the present invention.

Under a high-frequency condition, when the FAD valve assembly operates, the control valve 304 moves downward, and the balance valve 305 also tends to move downward, to provide a smooth downward support point for the mounting valve shim of the balance valve and the sealing element. Finally, a smooth support point feature for vertical movement of the balance valve in the operating process is formed. In addition, lower ends of the mounting valve shim and the sealing element of the balance valve are of a suspended design (not connected to the movable valve). During vertical movement, deformation of components does not affect the closing force of the FAD valve.

The control valve 304 and the balance valve 305 move downward, so that the spring sheet 3031 is deformed downward, to provide a displacement space for the control valve 304 and the balance valve 305 to move downward.

After the pressure in the pressure cavity is increased to a specific value, the support valve shim unit 3032 is deformed downward, to adjust a size of the pressure cavity and balance the pressure.

In combination with a system requirement, an operating pressure and a frequency of the FAD valve assembly 300 can be designed through model selection.

### Case 5: High-frequency compression

When the shock absorber is in a compression process at a relatively high frequency, the FAD valve assembly 300 does not function. Because the FAD valve assembly 300 is of an always-open oil liquid circulation flow route design. A part of oil liquid flows inside the FAD valve assembly 300, which reduces some compression damping, but the compression damping is of a trace amount, which may be ignored, and does not affect the overall damping force of the shock absorber. In this case, an oil liquid flow route of the FAD valve assembly 300 is: The oil liquid reversely enters the inside of the FAD valve assembly 300 through the route Fd3, reversely enters the route Fd2, and finally reversely flows out of the FAD valve assembly 300 through the route Fdl.

In an implementation, the FAD valve assembly 300 is in communication with the piston assembly 600, and strength of a closing force of the FAD valve assembly 300 is greater than strength of a closing force of the piston assembly 600.

In an implementation, a connection manner between the upper housing 301 and the lower housing 302 may be soldering, or may be threaded connection.

In an implementation, the upper housing 301 is made of a powder metallurgy material, or may be made of a metal injection material.

The valve upper housing 3044 is provided with a leaning module and an elastic deformation space module, to sequentially provide a leaning and elastic deformation space for the limiting valve shim 3043, the valve shim unit 3042, and the spring clip 3041.

The valve upper housing 3044 is made of any one of a powder metallurgy material, a composite material, and a metal injection material.

The valve shim unit 3042 and the spring clip 3041 are made of an elastic material.

The fluid relief valve shim 3057 and the sealing elastic valve shim 3056 are made of elastic materials.

The valve lower base 3051 is made of any one of a powder metallurgy material, a composite material, and a metal injection material.

The support valve shim unit 3032 is made of an elastic material, and has elasticity.

The spring sheet 3031 and the mounting valve shim 3054 are made of elastic materials, and have elasticity.

The lower housing 302 is arranged in a manner of deep stretching, to provide torque-fastening for the FAD valve assembly 300 and support the support valve assembly.

In the present invention, a sealing structure design is added, the sealing element 3055 achieves an isolation effect, to avoid pressure leakage in a pressure establishment process, affecting stability of a damping force. In addition, in an assembly process, the upper housing and the lower housing are assembled in a pre-tightening force controlling manner, and the pre-tightening force is set, so that tolerance stack-up of components is eliminated, the stability of the damping force is improved, and an initial closing force is provided by the pre-tightening force. The first fluid inflow channel 30444 of the valve upper housing is of a circulation hole design, and a buffer cavity is added to improve stability of the system. A design of the structure also satisfies a mold forming solution in which a powder metallurgy material and a composite material are used. The second fluid inflow channel 3052 of the valve lower base is used as a pressure flow rate control hole, has a high requirement on precision, and is designed as a short hole. The mold forming solution improves product stability. To avoid a problem of durability attenuation of the support spring sheet in the existing technical solution, the sealing element and the valve lower base are mounted in a groove manner and are of a suspended interference design, and are not in contact with the movable valve below, thereby satisfying sealing performance and ensuring the durability and the support performance, and improving product durability and stability.

The foregoing descriptions are merely preferred embodiments of the present invention, and certainly are not intended to limit the protection scope of the present invention. A person of ordinary skill in the art may understand all or some processes of the foregoing embodiments, and equivalent modifications made according to the claims of the present invention shall still fall within the scope of the present invention.

In this application, the terms "have", "include", "comprise" and similar terms are defined as "include", unless otherwise specified. In addition, in view of teachings in this application of the present invention, the terms used in the foregoing descriptions are defined herein to include similar and/or equivalent terms, and/or alternative embodiments are considered to be obvious to a person skilled in the art.

## Claims

1. A frequency self-adaptive damping valve assembly, comprising:
a housing, wherein the housing has an inlet port suitable for being fluidly connected to a first pressure chamber (306) and an outlet port (3013) suitable for being fluidly connected to a second pressure chamber (307); and
a valve member, biased against an outlet edge 3012 of the first pressure chamber 306 and arranged to allow, when pressure in the first pressure chamber 306 exceeds particular opening pressure, a fluid to flow from the inlet port to the outlet port 3013 directly through an opening gap (Fd4) between the outlet edge 3012 and the valve member, wherein
the second pressure chamber (307) is a volume-variable pressure chamber, and is fluidly connected to the first pressure chamber 306 through a fluid inflow channel, and is fluidly connected to the outlet port (3013) through a fluid outflow channel;
the second pressure chamber (307) is defined by a flexible annular sealing element (3055) on a side facing the first pressure chamber (306), the valve member has a support part, and the support part penetrates the sealing element (3055) and is supported on a support structure (3031) in the second pressure chamber 307; and
the support part has a first engaging surface (30514) sealingly engaged with an upper end surface of the sealing element (3055), and has a second engaging surface (30515) sealingly engaged with a lower end surface of the sealing element (3055), and the sealing element (3055) is mounted on the support part through the first engaging surface (30514) and the second engaging surface (30515), to bias the valve member toward a direction of the first pressure chamber (306) by using a force depending on pressure in the second pressure chamber (307).

2. The frequency self-adaptive damping valve assembly according to claim 1, wherein a diameter of an inner hole of the sealing element (3055) is less than an outer diameter of the support part in fit with the inner hole of the sealing element (3055), and an outer diameter of the sealing element (3055) is greater than an inner diameter of the housing in sealing fit with the sealing element (3055).

3. The frequency self-adaptive damping valve assembly according to claim 1, wherein an edge of the lower end surface of the sealing element (3055) extends downward to form a convex bump (30513).

4. The frequency self-adaptive damping valve assembly according to claim 1, wherein the second pressure chamber (307) is defined by a support valve shim unit (3032) on a side facing a bottom portion of the housing.

5. The frequency self-adaptive damping valve assembly according to claim 1, wherein the valve member comprises a valve upper housing (3044) and a valve lower base (3051), wherein
an always-open hole is formed on a body of the valve upper housing (3044) as a first fluid inflow channel (30444); an always-open hole is formed on a body of the valve lower base (3051) as a second fluid inflow channel (3052); and the first fluid inflow channel (30444) and the second fluid inflow channel (3052) form a part of the fluid inflow channel; and
a cross-sectional area of the second fluid inflow channel (3052) is less than a cross-sectional area of the first fluid inflow channel (30444).

6. The frequency self-adaptive damping valve assembly according to claim 5, wherein the body of the valve upper housing (3044) extends downward to form a buffer cavity forming portion (30443); a buffer cavity (30446) is formed inside the buffer cavity forming portion (30443); and the buffer cavity (30446) is located between the first fluid inflow channel (30444) and the second fluid inflow channel (3052), and the buffer cavity (30446), the first fluid inflow channel (30444), and the second fluid inflow channel (3052) are in fluid communication with each other.

7. The frequency self-adaptive damping valve assembly according to claim 6, wherein the buffer cavity forming portion (30443) is in sealing fit with the valve lower base (3051), and the valve lower base (3051) is in sealing and slidable fit with an inner wall of the housing through the sealing element (3055).

8. The frequency self-adaptive damping valve assembly according to claim 6, wherein a bottom portion of the buffer cavity has an opening structure, an opening edge (30445) of the buffer cavity forming portion (30443) is placed on the body of the valve lower base (3051), and a sealing member is arranged between the opening edge (30445) and the body of the valve lower base (3051).

9. The frequency self-adaptive damping valve assembly according to claim 1, wherein the valve member further comprises a mounting valve shim (3054), the support part is provided with a boss on a side facing the first pressure chamber 306, the mounting valve shim (3054) is nested on the boss, at least a part of an upper end surface of the mounting valve shim (3054) abuts against a body of the valve member, and a lower end surface of the mounting valve shim (3054) and an end surface of the boss are jointly used as the first engaging surface (30514) and are sealingly engaged with the sealing element (3055).

10. The frequency self-adaptive damping valve assembly according to claim 9, wherein a limiting support portion (3011) is arranged on a side wall of the housing, and the upper end surface of the mounting valve shim (3054) abuts against and is in fit with the limiting support portion (3011).

11. The frequency self-adaptive damping valve assembly according to claim 10, wherein an end surface of the limiting support portion (3011) that is in fit with the mounting valve shim (3054) has a planar structure, and a side of the limiting support portion (3011) that faces an internal space of the housing is set as an R-angle structure.

12. The frequency self-adaptive damping valve assembly according to claim 10, wherein the limiting support portion (3011) is arranged on an end surface of a part of an upper housing (301) that extends into a lower housing (302).

13. The frequency self-adaptive damping valve assembly according to claim 5, wherein an always-open hole used as the fluid outflow channel (3053) is further provided on the body of the valve lower base (3051); and an inlet of the fluid outflow channel (3053) is in fluid communication with the pressure cavity (307), and an outlet of the fluid outflow channel (3053) is in fluid communication with the outlet port (3013) through a fluid flow channel.

14. The frequency self-adaptive damping valve assembly according to claim 13, wherein a mounting space (30511) adapted to a buffer cavity forming portion (30443) is formed on the valve lower base (3051) and is used for placing the buffer cavity forming portion (30443); an opening edge (30445) of the buffer cavity forming portion (30443) is arranged on the body of the valve lower base (3051); and a fluid relief gap (308) is formed between an outer wall of the buffer cavity forming portion (30443) and the valve lower base (3051).

15. The frequency self-adaptive damping valve assembly according to claim 14, wherein the outlet of the fluid outflow channel (3053) is in fluid communication with the fluid relief gap (308), and the fluid relief gap (308) is in fluid communication with the outlet port (3013) through a fluid flow channel.

16. The frequency self-adaptive damping valve assembly according to claim 15, wherein a pressure relief cavity (309) is formed among the valve upper housing (3044), the valve lower base (3051), a mounting valve shim (3054), and an inner wall of the housing, and the pressure relief cavity (309) is in communication with the outside of the valve assembly housing through the outlet port (3013); and the fluid relief gap (308) extends from a gap between the valve lower base (3051) and the valve upper housing (3044) to the pressure relief cavity (309) and is in fluid communication with the pressure relief cavity (309).

17. The frequency self-adaptive damping valve assembly according to claim 8, wherein a sealing elastic valve shim (3056) is arranged between the buffer cavity forming portion (30443) and the valve lower base (3051), so that the buffer cavity forming portion (30443) is in sealing fit with the valve lower base (3051); and an outlet of the fluid outflow channel (3053) is located on an outer side of an edge of the sealing elastic valve shim (3056).

18. The frequency self-adaptive damping valve assembly according to claim 8, wherein a sealing elastic valve shim (3056) is arranged between the buffer cavity forming portion (30443) and the valve lower base (3051), so that the buffer cavity forming portion (30443) is in sealing fit with the valve lower base (3051); and an outlet of the fluid outflow channel (3053) is located on an inner side of an edge of the sealing elastic valve shim (3056), and a fluid relief valve shim (3057) is arranged at the outlet of the fluid outflow channel (3053), so that the fluid outflow channel (3053) is in fluid communication with a fluid relief gap (308).

19. The frequency self-adaptive damping valve assembly according to claim 18, wherein the fluid relief valve shim (3057) is a throttle valve shim.

20. The frequency self-adaptive damping valve assembly according to claim 18, wherein a notch or a gap is provided on the fluid relief valve shim (3057), the fluid relief valve shim (3057) is located between the outlet of the fluid outflow channel (3053) and the sealing elastic valve shim (3056), and the fluid flows into the fluid relief gap (308) through the notch or the gap.

21. The frequency self-adaptive damping valve assembly according to claim 1, wherein the valve member further comprises a support valve shim unit (3032) and a support sealing member (3033); the support valve shim unit (3032) is arranged at a bottom portion of the housing, the support sealing member (3033) is placed on the support valve shim unit (3032), the support valve shim unit (3032) is in sealing fit with an inner wall of the housing through the support sealing member (3033), and the support structure (3031) and the support sealing member (3033) are movable along the inner wall of the housing; and the support structure (3031) is arranged on the support sealing member (3033), and a valve lower base (3051) is arranged on the support structure (3031).

22. The frequency self-adaptive damping valve assembly according to claim 21, wherein the support structure (3031) is a spring sheet, and the spring sheet (3031) is provided with a communication hole (30311) communicating an upper side and a lower side of the spring sheet (3031), and a space on the upper side of the spring sheet (3031) is in communication with a space on the lower side of the spring sheet (3031) through the communication hole (30311).

23. A shock absorber, comprising the frequency self-adaptive damping valve assembly according to any one of claims 1 to 22, wherein a fluid inlet channel located in a piston rod of the shock absorber is in fluid communication with an inlet port of a first pressure chamber (306).
